# FASCICULE DE BREVET EUROPEEN

(11) **EP 3 292 352 B1**
(45) Date de publication et mention de la délivrance du brevet: **29.01.2020**
(21) Numéro de dépôt: 16720436.1
(22) Date de dépôt: 04.05.2016
(51) Int. Cl.: F28F 1/12, B60R 19/52, F24D 19/06, F28D 21/00, F24H 3/04, F28D 1/053, F28F 19/00

(54) **ECHANGEUR DE CHALEUR COMPORTANT UN DISPOSITIF DE PROTECTION**
WÄRMETAUSCHER MIT EINER SCHUTZVORRICHTUNG
HEAT EXCHANGER COMPRISING A PROTECTIVE DEVICE

(30) Priorité: 06.05.2015 FR 1554049
(43) Date de publication de la demande: 14.03.2018
(73) Titulaire: Valeo Systèmes Thermiques, 78320 Le Mesnil Saint Denis (FR)
(72) Inventeur: BIREAUD, Fabien, 78320 Le Mesnil Saint-Denis (FR); MARCHADIER, Xavier, 78320 Levis Saint Nom (FR); TRINDADE, José, 78125 Gazeran (FR); NGUYEN, Dinh-Luyen, 78180 Montigny-le-Bretonneux (FR)
(74) Mandataire: Tran, Chi-Hai
(86) Numéro de dépôt international: PCT/EP2016/060088
(87) Numéro de publication internationale: WO 2016/177831

(56) Documents cités:
- EP-A1- 2 011 976
- WO-A1-98/50751
- JP-A- 2011 162 092

## Description

L'invention concerne le domaine des échangeurs de chaleur placé en face avant d'un véhicule automobile.

Dans le domaine automobile, les échangeurs de chaleur placés en face avant peuvent être victime de projections de débris ou pierres pouvant endommager ou même percer les tubes plats à l'intérieur desquels circule un fluide caloporteur.

Afin de protéger ces échangeurs thermiques, il est connu de placer au devant d'eux un dispositif de protection pouvant absorber ces chocs. Néanmoins la fixation de ces dispositifs de protection est généralement réalisée par des clips qu'il faut mettre en place manuellement, ce qui est long et fastidieux et non compatible avec une production rapide en masse. La fixation du dispositif de protection peut également être réalisée en périphérie de l'échangeur thermique mais cela peut entraîner des problèmes de vibration en condition de roulage du fait que le dispositif de protection n'est pas fixé dans sa partie centrale. De tels dispositifs sont divulgués dans les documents WO 98/50751, EP 2 011 976 A1 et JP 2011 162092.

Ainsi, un des buts de l'invention est de remédier au moins partiellement aux inconvénients de l'art antérieur et de proposer un échangeur de chaleur comportant un dispositif de protection à fixation améliorée.

La présente invention concerne donc un échangeur de chaleur selon la revendication 1.

La présence de pics de fixation permet de fixer le dispositif de protection contre l'échangeur thermique par simple pression de ce dernier contre l'échangeur thermique. Les pics de fixation s'insèrent ainsi entre les ailettes, les déforment, et maintiennent ledit dispositif de protection.

Selon un mode de réalisation de l'invention, lesdits tubes sont des tubes plats.

Selon l'invention, les pics de fixation ont une largeur supérieure à l'écartement entre deux ailettes.

Selon un autre mode de réalisation de l'invention, les pics de fixation viennent de matière avec le dispositif de protection.

Selon un autre mode de réalisation de l'invention, le dispositif de protection comporte des barres longitudinales, parallèles les unes aux autres et recouvrant les côtés des tubes plats, et des entretoises reliant lesdites barres longitudinales, les pics de fixation étant disposés sur lesdites entretoises.

Selon un autre mode de réalisation de l'invention, les pics de fixation ont une longueur inférieure à la largeur des ailettes.

Selon un autre mode de réalisation de l'invention, les pics de fixation ont une longueur supérieure ou égale à la largeur des ailettes.

Selon un autre mode de réalisation de l'invention, le dispositif de protection comporte en outre des fixations par emboîtage élastique, lesdites fixations par emboîtage élastique venant se positionner entre deux tubes plats dans une portion en périphérie de l'échangeur thermique exempte d'ailettes.

Selon un autre mode de réalisation de l'invention, le dispositif de protection est réalisé en matière plastique.

Selon un mode de réalisation de l'échangeur thermique, au moins sa moitié inférieure comporte le dispositif de protection.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en perspective d'un dispositif de protection,
- la figure 2 montre une représentation schématique en perspective d'un dispositif de protection lors de sa mise en place sur un échangeur thermique,
- la figure 3 montre une représentation schématique d'un échangeur thermique en vue arrière au niveau de la fixation du dispositif de protection,
- la figure 4 montre une représentation schématique d'un échangeur thermique avec dispositif de protection en vue de face.

Sur les différentes figures, les éléments identiques portent les mêmes numéros de référence.

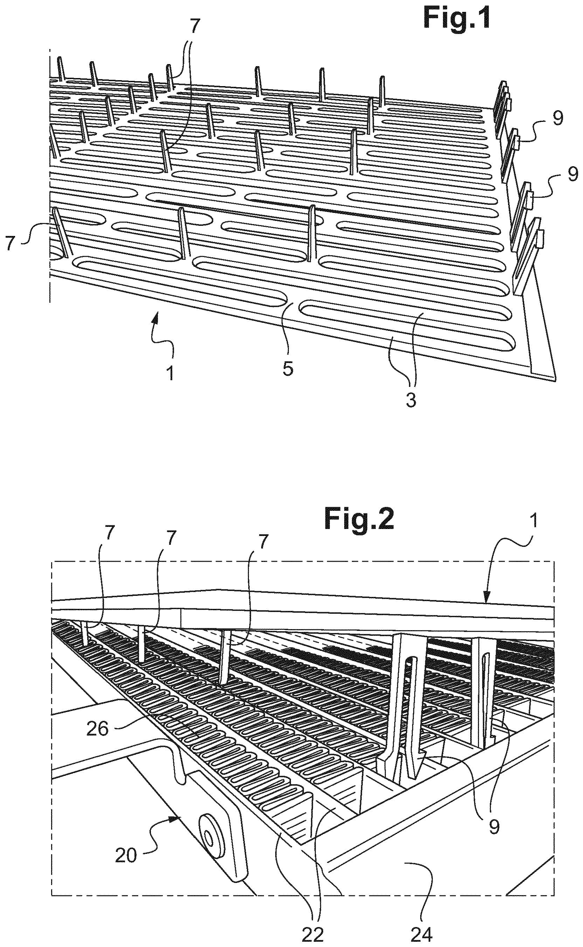

Les figures 1 et 2 montrent un dispositif de protection 1 pour un échangeur de chaleur 20. L'échangeur de chaleur 20 comporte des tubes 22, qui sont ici des tubes plats, parallèles entre eux, dans lesquels circule un premier fluide entre des collecteurs 24. Entre ces tubes plats 22 sont disposées des ailettes 26 reliant deux tubes plats 22 successifs. Un second fluide circule entre lesdits tubes plats 22 en traversant lesdites ailettes 26.

Le dispositif de protection 1 est de préférence réalisé en matière plastique et il est ajouré de sorte à permettre la circulation du second fluide au travers des ailettes 26. Le dispositif de protection 1 comporte également des pics de fixation 7 venant s'insérer en force entre les ailettes 26 lors de sa mise en place comme le montre plus en détail la figure 2.

La présence de ces pics de fixation 7 permet de fixer le dispositif de protection 1 contre l'échangeur de chaleur 20 par simple pression de ce dernier contre l'échangeur 20. Les pics de fixation 7 s'insèrent ainsi entre les ailettes 2, les déforment, et maintiennent ledit dispositif de protection.

Le nombre des pics de fixation 7 ainsi que leur répartition est adapté pour une fixation convenable du dispositif de protection 1 et également pour éviter toute vibration de ce dernier en condition de roulage.

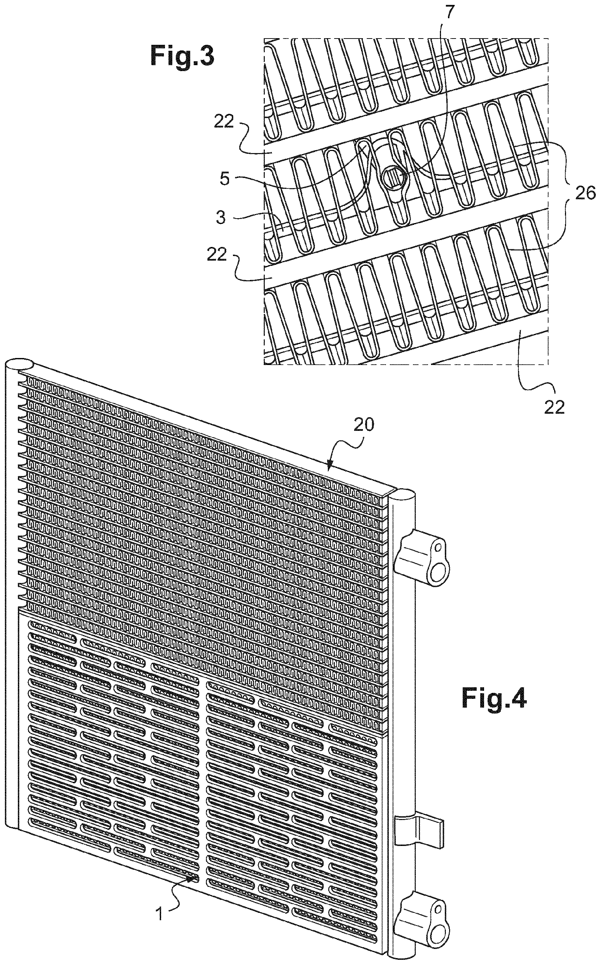

Comme montrer sur les figures 1 et 4, le dispositif de protection 1 peut comporter :
- des barres longitudinales 3, parallèles les unes aux autres et destinées à recouvrir les côtés des tubes plats 22, et
- des entretoises 5 reliant lesdites barres longitudinales 3,
Les pics de fixation 7 sont alors disposés sur les entretoises 5 afin d'être positionnés en face des ailettes 26.

Le dispositif de protection 1 peut par exemple ne recouvrir que la moitié inférieure de l'échangeur de chaleur 20, qui est sa portion la plus exposée aux impacts car la plus proche du sol.

Afin de permettre une bonne fixation du dispositif de protection 1, les pics de fixation 7 ont une largeur supérieure à l'écartement entre deux ailettes 26 comme le montre la figure 3.

Les pics de fixations 7 viennent de préférence de matière avec le dispositif de fixation 1 de sorte à permettre une fabrication aisée de ce dernier, par exemple par moulage.

Les pics de fixation 7 peuvent avoir une longueur inférieure à la largeur des ailettes 26 ou encore une longueur supérieure ou égale à la largeur des ailettes 26. La détermination de la longueur des pics de fixation 7 est fonction de leur nombre ainsi que de la force de fixation souhaitée. Plus les pics de fixation 7 seront longs, plus la force de fixation sera grande.

Le dispositif de protection 1 peut comporter en outre des fixations par emboîtage élastique 9 (clips) venant se positionner entre deux tubes plats 22 dans une portion en périphérie de l'échangeur 20 exempte d'ailettes 26, comme illustré sur la figure 2. Ces fixations par emboîtage élastique 9 renforcent d'autant la fixation du dispositif de protection 1, notamment dans les zones périphériques de l'échangeur de chaleur 20 où les ailettes 26 ne sont pas présentes et où des vibrations peuvent se former.

Ainsi, on voit bien que le dispositif de protection 1, du fait de la présence de la multitude de pics de fixation 7, est solidement fixé à l'échangeur thermique 1 et peut s'installer facilement sans opérations complexes.

## Revendications

1. Echangeur de chaleur, notamment pour véhicule automobile, comportant un dispositif de protection (1), des tubes (22) parallèles entre eux et dans lesquels circulent un premier fluide et des ailettes (26) perpendiculaires reliant deux tubes (22) successifs, un second fluide circulant entre lesdits tubes (22) en traversant lesdites ailettes (26), ledit dispositif de protection (1) étant ajouré de sorte à permettre la circulation du second fluide au travers des ailettes (26), **caractérisé en ce que** ledit dispositif de protection (1) comporte des pics de fixation (7) venant s'insérer en force entre les ailettes (26), et dans lequel les pics de fixation (7) ont une largeur supérieure à l'écartement entre deux ailettes (26).

2. Echangeur (20) selon la revendication précédente, **caractérisé en ce que** les pics de fixation (7) viennent de matière avec le dispositif de protection (1).

3. Echangeur (20) selon l'une quelconque des revendications précédentes, **caractérisé en ce qu'**il comporte des barres longitudinales (3), parallèles les unes aux autres et recouvrant les côtés des tubes (22), et des entretoises (5) reliant lesdites barres longitudinales (3), les pics de fixation (7) étant disposés sur lesdites entretoises (5).

4. Echangeur (20) selon l'une quelconque des revendications précédentes, **caractérisé en ce que** les pics de fixation (7) ont une longueur inférieure à la largeur des ailettes (26).

5. Echangeur (20) selon l'une quelconque des revendications 1 à 3, **caractérisé en ce que** les pics de fixation (7) ont une longueur supérieure ou égales à la largeur des ailettes (26).

6. Echangeur (20) selon l'une quelconque des revendications précédentes, **caractérisé en ce qu'**il comporte en outre des fixations par emboîtage élastique (9), lesdites fixations par emboîtage élastique (9) venant se positionner entre deux tubes (22) dans une portion en périphérie de l'échangeur thermique (20) exempte d'ailettes (26).

7. Echangeur (20) selon l'une quelconque des revendications précédentes, **caractérisé en ce qu'**il est réalisé en matière plastique.

8. Échangeur (20) selon l'une quelconque des revendications précédentes, **caractérisé en ce qu'**au moins sa moitié inférieure comporte le dispositif de protection (1).

## Patentansprüche

1. Wärmetauscher, insbesondere für ein Kraftfahrzeug, welcher eine Schutzvorrichtung (1), Rohre (22), die zueinander parallel sind und in denen ein erstes Fluid durchfließt, und senkrechte Rippen (26), die zwei aufeinander folgende Rohre (22) verbinden, aufweist, wobei ein zweites Fluid zwischen den Rohren (22) durchfließt und dabei die Rippen (26) durchquert, wobei die Schutzvorrichtung (1) durchbrochen ist, um den Durchfluss des zweiten Fluids durch die Rippen (26) hindurch zu ermöglichen, **dadurch gekennzeichnet, dass** die Schutzvorrichtung (1) Befestigungsspitzen (7) aufweist, die unter Kraftanwendung zwischen die Rippen (26) eingefügt werden, und wobei die Befestigungsspitzen (7) eine Breite aufweisen, die größer als der Abstand zwischen zwei Rippen (26) ist.

2. Wärmetauscher (20) nach dem vorhergehenden Anspruch, **dadurch gekennzeichnet, dass** die Befestigungsspitzen (7) stoffschlüssig mit der Schutzvorrichtung (1) verbunden sind.

3. Wärmetauscher (20) nach einem der vorhergehenden Ansprüche, **dadurch gekennzeichnet, dass** er Längsstangen (3), die zueinander parallel sind und die Seiten der Rohre (22) bedecken, und Versteifungen (5), welche die Längsstangen (3) verbinden, aufweist, wobei die Befestigungsspitzen (7) auf den Versteifungen (5) angeordnet sind.

4. Wärmetauscher (20) nach einem der vorhergehenden Ansprüche, **dadurch gekennzeichnet, dass** die Befestigungsspitzen (7) eine Länge haben, die kleiner als die Breite der Rippen (26) ist.

5. Wärmetauscher (20) nach einem der Ansprüche 1 bis 3, **dadurch gekennzeichnet, dass** die Befestigungsspitzen (7) eine Länge haben, die größer oder gleich der Breite der Rippen (26) ist.

6. Wärmetauscher (20) nach einem der vorhergehenden Ansprüche, **dadurch gekennzeichnet, dass** er außerdem Elemente zur Befestigung durch elastisches Einstecken (9) aufweist, wobei die Elemente zur Befestigung durch elastisches Einstecken (9) in einem Abschnitt am Umfang des Wärmetauschers (20), in dem keine Rippen (26) vorhanden sind, in Positionen zwischen zwei Rohren (22) gelangen.

7. Wärmetauscher (20) nach einem der vorhergehenden Ansprüche, **dadurch gekennzeichnet, dass** er aus Kunststoff hergestellt ist.

8. Wärmetauscher (20) nach einem der vorhergehenden Ansprüche, **dadurch gekennzeichnet, dass** wenigstens seine untere Hälfte die Schutzvorrichtung (1) aufweist.

## Claims

1. Heat exchanger, in particular for a motor vehicle, comprising a protective device (1), mutually parallel tubes (22) through which a first fluid circulates, and perpendicular fins (26) connecting two successive tubes (22), a second fluid circulating between said tubes (22) by passing through said fins (26), said protective device (1) being apertured so as to allow the circulation of the second fluid through the fins (26), **characterized in that** said protective device (1) comprises fixing spikes (7) which are inserted forcibly between the fins (26), and wherein the fixing spikes (7) have a width which is greater than the spacing between two fins (26).

2. Exchanger (20) according to the preceding claim, **characterized in that** the fixing spikes (7) are integrally formed with the protective device (1).

3. Exchanger (20) according to either one of the preceding claims, **characterized in that** it comprises longitudinal bars (3), which are parallel to one another and cover the sides of the tubes (22), and spacers (5) connecting said longitudinal bars (3), the fixing spikes (7) being arranged on said spacers (5) .

4. Exchanger (20) according to any one of the preceding claims, **characterized in that** the fixing spikes (7) have a length which is less than the width of the fins (26).

5. Exchanger (20) according to any one of Claims 1 to 3, **characterized in that** the fixing spikes (7) have a length which is greater than or equal to the width of the fins (26).

6. Exchanger (20) according to any one of the preceding claims, **characterized in that** it additionally comprises elastic-engagement fixings (9), said elastic-engagement fixings (9) being positioned between two tubes (22) in a peripheral portion of the heat exchanger (20) free of fins (26).

7. Exchanger (20) according to any one of the preceding claims, **characterized in that** it is made of plastic.

8. Exchanger (20) according to any one of the preceding claims, **characterized in that** at least its lower half comprises the protective device (1).
